# EUROPEAN PATENT APPLICATION

(11) **EP 0 715 472 A2**
(43) Date of publication of application: **05.06.1996**
(21) Application number: 95118559.4
(22) Date of filing: 24.11.1995
(51) Int. Cl.: H04N 11/16, H04N 9/83

(54) **Video signal processing circuit and video signal recording and reproducing apparatus**

(30) Priority: 29.11.1994 JP 321716/94
(71) Applicant: VICTOR COMPANY OF JAPAN, LIMITED, Yokohama-Shi Kanagawa-Ken 221 (JP)
(72) Inventor: Yamada, Hiroshi, Tokyo (JP)
(74) Representative: Wagner, Karl H., Dipl.-Ing.

(57) **Abstract**

A video signal of the PALplus system tends to be influenced by noise in transmission and/or in recording or reproducing operation since a maximum amplitude of a modulated helper signal obtained by AMmodulating a helper signal of the video signal is smaller than a maximum amplitude of a main signal timedivision multiplexed with the modulated helper signal. In a video signal processing circuut for displaying the video signal of the PALplus system or a video signal recording apparatus for recording it, the video signal is displayed or recorded after noise component of the helper signal obtained by AMdemodulating the modulated helper signal is removed by a coring processing. In recording, the video signal is recorded on a recording medium as a timedivision multiplexed signal of the helper signal obtained by demodulating the modulated helper signal and the main signal. In reproducing, the helper signal of the reproduced video signal is AMmodulated again, resulting in a re-modulated helper signal. Noise component of the re-modulated helper signal is removed by the coring processing. Thus, the effect of noise added during the transmission of the video signal and/or noise generated by recording/reproducing operation with respect to the recording medium on the helper signal can be reduced.

## Description

### BACKGROUND OF THE INVENTION

The present invention relates to a video signal processing circuit for processing a continuous high definition video signal of a certain broadcasting system having an aspect ratio different from an aspect ratio of another broadcasting system to transmit, display or record and/or reproduce the video signal, a video signal recording apparatus using the same circuit and a video signal recording and reproducing apparatus.

An EDTV (Extended Definition TV) system has been known as a broadcasting system which is compatible with a current broadcasting system while improving defects of the current broadcasting system. Among others of the EDTV system, the socalled "PALplus" system is known which improves the image quality of the PAL (Phase Alternation by Line) broadcasting system and is able to widen a screen to thereby enable an image having aspect ratio of 16 : 9 to be displayed.

Japanese Patent Application Laidopen No. H616012, entitled "Video Signal recording and Reproducing System, Video signal Recording and Reproducing Apparatus and Video signal Modulation and Demodulation Device", discloses a system and apparatus related to the PALplus system.

As disclosed in the above mentioned Japanese Patent Application, a video signal of the PALplus system can be displayed on a display such as a TV receiver of the PAL broadcasting system by using the letterbox display method which reduces a widescreen image of the PALplus. In the PALplus system, in order to restrict the degradation of the vertical resolution caused when the reduced widescreen image is expanded to display the reduced widescreen image on a TV receiver having a display screen having aspect ratio of 16 : 9, an encoded video signal superposed with an auxiliary signal (referred to as "helper signal", hereinafter) for improving definition of a video information which is a main signal is transmitted together with the main signal.

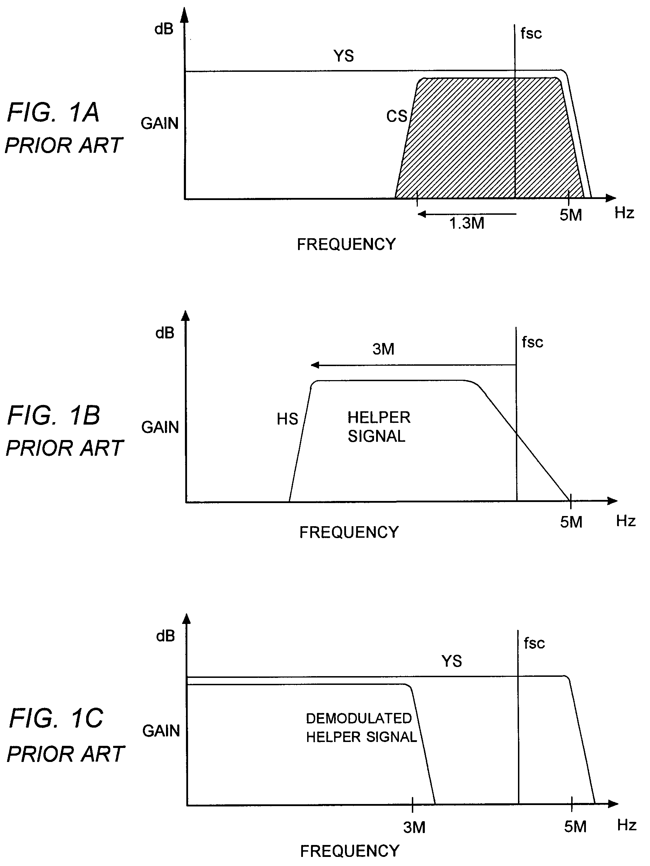

Figs. 1A and 1B show frequency spectrum of the above mentioned encoded video signal. The encoded video signal contains frequency spectra YS and CS of a luminance signal Y and a chrominance signal C which constitute the main signal as shown in Fig. 1A and a frequency spectrum HS of the AM modulated helper signal H as shown in Fig. 1B. The modulated helper signal is obtained by VSB (Vestal Side Band) modulation of a carrier frequency of 4.43 MHz (equal to a color subcarrier frequency) with the helper signal. The frequency spectrum HS of the modulated helper signal has a frequency band width of about 3 MHz in a lower side of the color subcarrier frequency and has an upper frequency limit of about 5 MHz which is the same as upper frequency limits of the luminance signal Y and the chrominance signal C.

The luminance signal Y is a baseband signal. A lower frequency limit of the frequency spectrum YS of the luminance signal Y is 0 MHz and an upper frequency limit thereof is about 5 MHz and a gain of the luminance signal is maximum constantly in the frequency range from 0 MHz to about 5 MHz and then sharply lowered.

The frequency spectrum CS of the chrominance signal C has a frequency band width of about 1.3 MHz in the lower side of the color subcarrier frequency (fsc) of 4.43 MHz and of about 0.5 MHz in the upper side thereof and an upper frequency limit thereof is about 5 MHz which is equal to that of the luminance signal Y.

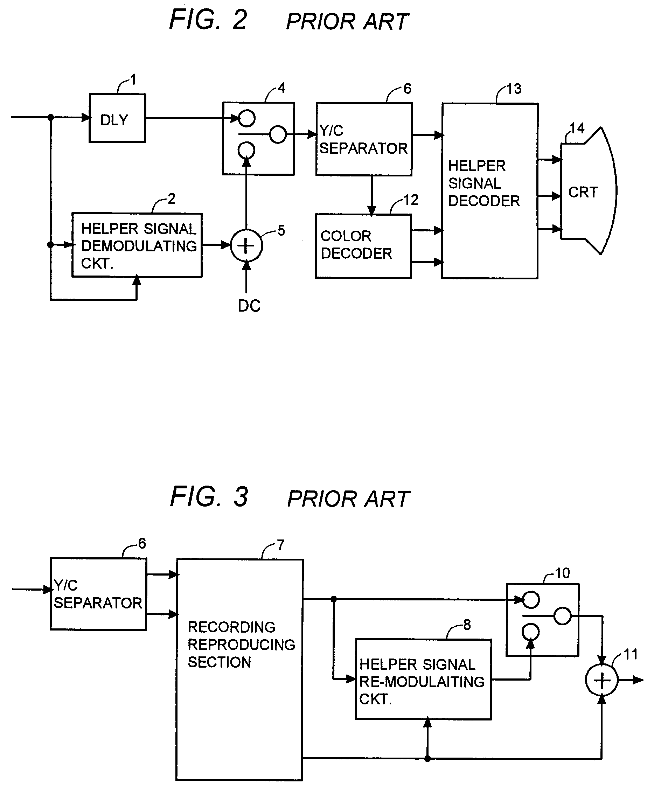

Fig. 2 shows a display device of the PAL broadcasting system for displaying the encoded video signal. In Fig. 2, the encoded video signal is supplied through a delay circuit 1 to a switch 4, a helper signal demodulator 2 and a burst pickup circuit which is not shown. The switch 4 normally supplies the video signal of the PALplus system to a Y/C separator 6 as it is. In response to a reception of the helper signal, the switching circuit 4 is switched to supply the helper signal in the form of baseband which is output from a helper signal demodulator circuit 5 to the Y/C separator circuit 6 through a reference level producing circuit 5.

The Y/C separator cicuit 6 separates the video signal supplied from the switch 4 to a luminance signal and a chrominance signal. The band width of the chrominanc signal is usually limited to ± about 0.5 MHz centered at the color subcarrier frequency of 4.43 MHz. Further, since, as shown in Fig. 1C, the upper frequency limit of the demodulated helper signal is 3 MHz, all of the demodulated helper signals are separated as the luminance signal.

The luminance signal and the demodulated helper signals are supplied to a helper signal decoder 13 for decoding the demodulated helper signals. The chrominance signal is supplied through a color decoder 12 to the helper signal decoder 13. The color decoder 12 converts the supplied chrominance signal into a color difference signal and supplies the latter to the helper signal decoder 13. The helper signal decoder 13 produces primary color signals (RGB signals) from the luminance signal and the color difference signal and supplies them to a cathode ray tube (CRT) 14. Further, the helper signal decoder 13 combines the demodulated helper signal with the luminance signal to improve the vertical resolution of the luminance signal to thereby improve the fineness of the video signal. Thus, the video signal of the PALplus system is displayed on the CRT 14.

Fig. 3 shows a construction of a VTR for recording and reproducing the above mentioned encoded video signal, schematically. In Fig. 3, the encoded video signal supplied to the VTR is separated by the Y/C separator 6 to the chrominance signal and the luminance signal (including the helper signals of baseband) and supplies them to a recording and reproducing system 7 of the VTR. The recording and reproducing system 7 comprises a known recording signal processing circuit for processing the luminance and chrominance signals in a predetermined manner, a rotaty head for recording a recording signal modulated through the recording signal processing circuit on a magnetic recording medium such as a magnetic tape and a reproducing signal processing circuit for reproducing the recording signal recorded on the magnetic recording medium and demodulating the reproduced luminance and chrominance signals.

The reproduced luminance signal is supplied to a switching circuit 10 and a helper signal re-modulator circuit 8. The helper signal re-modulator circuit 8 AMmodulates a carrier frequency equal to the color subcarrier frequency with the reproduced baseband helper signal and outputs a re-modulated helper signal. The re-modulated helper signal is filtered to obtain a signal having the VSB characteristics such as shown in Fig. 1B. That is, the re-modulated helper signal having a frequency spectrum HS similar to that of the modulated helper signal input to the recording/reproducing system 7 of the VTR is obtained.

The switching circuit 10 selectively outputs one of the reproduced luminance signal and the re-modulated helper signal to a mixer circuit 11. The mixer circuit 11 is further supplied with the reproduced chrominance signal and produces a video signal of the PALplus system by mixing the reproduced luminance signal from the switching circuit 10 and the reproduced chrominance signal.

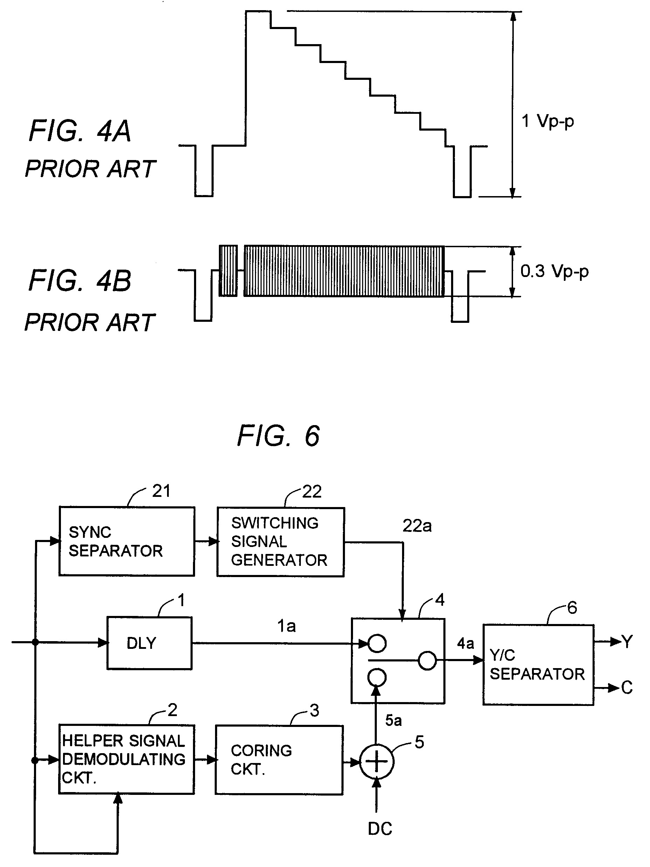

However, in a case, for example, where a video signal of the PALplus system transmitted from a broadcasting station is received by the above mentined display device, there is a problem that noise superposed on the transmitted video signal and having a level higher than a certain level provides a visual noise on the display screen of the display device. This is because an amplitude level of the luminance signal is 1Vpp as shown in Fig. 4A and an amplitude level of the modulated helper signal is 0.3 Vpp at most and, when noise having same level as that of the transmitted signal is superposed on the latter, the S/N ratio of the helper signal is degraded by about 10 dB with respect to the luminance signal.

That is, when the helper signal whose S/N ratio is thus degraded is mixed with the luminance signal by the helper decoder shown in Fig. 2, the helper signal may disturb the luminance signal. When such disturbance exceeds a certain constant level, there is a visual noise on the display screen of the CRT 14. That is, even when the level of noise superposed on the transmitted video signal is within a negligible range (for example, within a range in which visual noise on the display screen is tolerable) compared with the amplitude level of the luminance signal, visual noise is still produced on the display screen of the CRT due to the degraded S/N ratio of the helper signal combined therewith.

The degradation of S/N ratio of the helper signal is caused by the fact that, in order to maintain the compatibility between the current PAL system and the PALplus system, the amplitude level of the modulated helper signal is limited and thus degradation of the S/N ratio is a fundamental problem. The effect of such noise increases proportionally to an increase of a physical transmission distance of the video signal.

Further, in a VTR such as shown in Fig. 3, noise appears on a luminance signal and a helper signal which are processed by a signal processing circuit, a rotary head and a magnetic tape, etc., included in the VTR. Such noise will be referred to as "VTR noise" hereinafter. Such VTR noise affects an image on a TV screen adversely during reprodcing operation.

That is, when a transmitted video signal is reproduced by this VTR, a reproduced video signal contains the VTR noise in addition to the noise component superposed on an encoded video signal when the latter is transmitted.

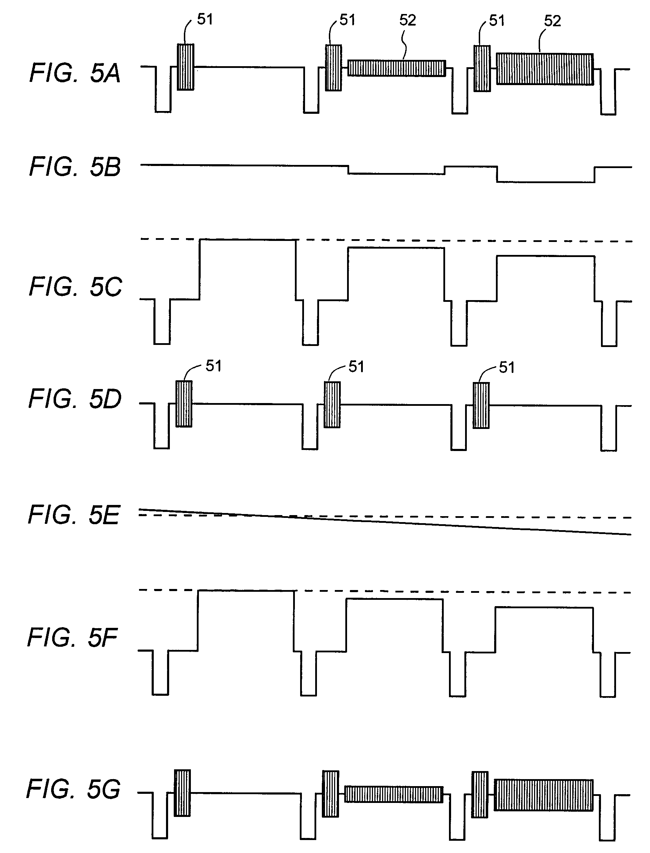

Further, in the VTR, when the modulated helper signal is demodulated during a recording operation, the following problem occurs: for example, when, in an input signal such as shown in Fig. 5A (a combination of a burst signal 51 and a modulated helper signal 52), the modulated helper signal level increases gradually from "0" level, a signal such as shown in Fig. 5B is obtained by demodulating the input signal by the helper signal demodulator circuit 2. That is, the luminance signal Y separated by the Y/C separator circuit 6 becomes as shown in Fig. 5C, which is supplied to the VTR recording/reproducing system 7.

On the other hand, when, in demodulating such input signal as shown in Fig. 5D (a combination of the burst signal 51 and the helper signal, with the level of the helper signal being "0") by the helper signal demodulator circuit 2, a DC value variation such as shown in Fig. 5E (it corresponds to a sag that a DC level is gradually lowered from a reference value (for example, 0.35 V )) occurs, there is a similar sag produced on the demodulated helper signal correspondingly to the DC value variation. Therefore, the luminance signal separated by the Y/C separator circuit 6 becomes as shown in Fig. 5F (substantially identical to Fig. 5C), which is supplied to the VTR recording/reproducing system 7. In this case, when a reproduced luminance signal output from the VTR recording/reproducing system 7 which is the same as that shown in Fig. 5C is re-modulated, it becomes as shown in Fig. 5G. Therefore, it becomes impossible to distinguish the re-modulated luminance signal from the helper signal component (Fig. 5A) since the modulated output appears as noise component despite that the level of the helper signal of the input signal shown in Fig. 5D is "0". This noise component becomes visual disturbance on the TV screen.

### SUMMARY OF THE INVENTION

An object of the present invention is to improve, in a video signal processing circuit, a video signal recording apparatus and a video signal recording/reproducing apparatus
for a video signal of the PALplus system, an S/N ratio of an auxilirary signal transmitted together with a main signal in time division.

Another object of the present invention is to provide a video signal processing circuit for processing a high definition video signal compatible with a predetermined broadcasting system, which has an aspect ratio different from that of the predetermined broadcasting system and contains a main signal constituing the high defintion video signal and a modulated auxiliary signal obtained by modulating an auxiliary signal containing additional video information in a predetermined modulation system, the video signal processing circuit comprising demodulating means for demodulating the modulated auxiliary signal to a baseband signal and outputting a demodulated auxiliary signal and noise removing means for removing noise component superposed on the demodulated auxiliary signal output from the demodulating means.

Another object of the present invention is to provide a video signal processing circuit for processing a high definition video signal compatible with a predetermined broadcasting system, which has an aspect ratio different from that of the predetermined broadcasting system and contains a main signal constituting the high defintion video signal and a modulated auxiliary signal obtained by modulating an auxiliary signal containing additional video information in a predetermined modulation system, the video signal processing circuit comprising noise removing means for removing noise component superposed on the modulated auxiliary signal and demodulating means for demodulating an output signal of said noise removing means and outputting a demodulated auxiliary signal.

Another object of the present invention is to provide a video signal recording apparatus for recording a high definition video signal compatible with a predetermined broadcasting system, which has an aspect ratio different from that of the predetermined broadcasting system and contains a main signal constituing the high defintion video signal and a modulated auxiliary signal obtained by modulating an auxiliary signal containing additional video information in a predetermined modulation system, the video signal recording apparatus comprising demodulating means for demodulating the modulated auxiliary signal and outputting a demodulated auxiliary signal, noise removing means for removing noise component superposed on the demodulated auxiliary signal output from the demodulating means and recording means for recording a video signal containing at least the demodulated auxiliary signal output from the noise removing means.

Another object of the present invention is to provide a video signal recording apparatus for recording a high definition video signal compatible with a predetermined broadcasting system, which has an aspect ratio different from that of the predetermined broadcasting system and contains a main signal constituting the high defintion video signal and a modulated auxiliary signal obtained by modulating an auxiliary signal containing additional video information in a predetermined modulation system, said video signal recording apparatus comprising noise removing means for removing noise component superposed on the modulated auxiliary signal, demodulating means for demodulating an output signal of said noise removing means and outputting a demodulated auxiliary signal and recording means for recording a video signal containing at least the demodulated auxiliary signal output from said demodulating means.

Another object of the present invention is to provide a video signal recording and reproducing apparatus for recording and reproducing a high definition video signal compatible with a predetermined broadcasting system, which has an aspect ratio different from that of the predetermined broadcasting system and contains a main signal constituing the high defintion video signal and a modulated auxiliary signal obtained by modulating an auxiliary signal containing additional video information in a predetermined modulation system, the video signal recording and reproducing apparatus comprising demodulating means for demodulating the modulated auxiliary signal and outputting a demodulated auxiliary signal, recording and reproducing means for recording and reproducing a video signal containing at least the demodulated auxiliary signal output from the demodulating means, re-modulating means for remodulaing at least the auxiliary signal of the reproduced signal output from the recording and reproducing means and outputting a re-modulated auxiliary signal and noise removing means for removing noise component superposed on the demodulated auxiliary signal output from the re-modulation means.

Another object of the present invention is to provide a video signal recording and reproducing apparatus for recording and reproducing a high definition video signal compatible with a predetermined broadcasting system, which has an aspect ratio different from that of the predetermined broadcasting system and contains a main signal constituting the high defintion video signal and a modulated auxiliary signal obtained by modulating an auxiliary signal containing additional video information in a predetermined modulation system, said video signal recording and reproducing apparatus comprising demodulating means for demodulating the modulated auxiliary signal and outputting a demodulated auxiliary signal, recording and reproducing means for recording and reproducing a video signal containing at least the demodulated auxiliary signal output from said demodulating means, noise removing means for removing noise component superposed on the reproduced signal output from said recording and reproducing means and re-modulating means for re-modulaing at least the auxiliary signal of an output signal output from said noise removing means and outputting a re-modulated auxiliary signal.

### BRIEF DESCRIPTION OF THE DRAWINGS

Fig. 1A shows frequency spectrum of a main signal of an encoded video signal;
Fig. 1B shows a frequency spectrum of a modulated helper signal;
Fig. 1C shows frequency spectra of a demodulated helper signal and a luminance signal;
Fig. 2 shows schematically a conventional display device;
Fig. 3 shows schematically a conventional VTR;
Figs. 4A and 4B illustrate the encoded video signal to be transmitted;
Figs. 5A to 5G illustrate the encoded video signal on which a D.C. value variation is superposed;
Fig. 6 is a block diagram of a video signal processing circuit according to a first embodiment of the present invention;
Fig. 7 is a graph showing an input/outoput characteristics of a coring circuit;
Fig. 8 shows a concrete construction of the coring circuit;
Figs. 9A to 9D show signal waveforms at various portions of the video signal processing circuit shown in Fig. 6;
Fig. 10 is a block diagram of a video signal recording apparatus according to a second embodiment of the present invention;
Fig. 11 is a block diagram of a video signal reproducing apparatus according to a third embodiment of the present invention; and
Fig. 12 shows signal waveforms at various portions of the video signal reproducing apparatus shown in Fig. 11.
Fig. 13 shows modification of the video signal processing apparatus shown in Fig. 6.
Fig. 14 shows modification of the video signal reproducing appratus shown in Fig. 11.

### DETAILED DESCRIPTION OF THE PREFERRED EMBODIMENTS

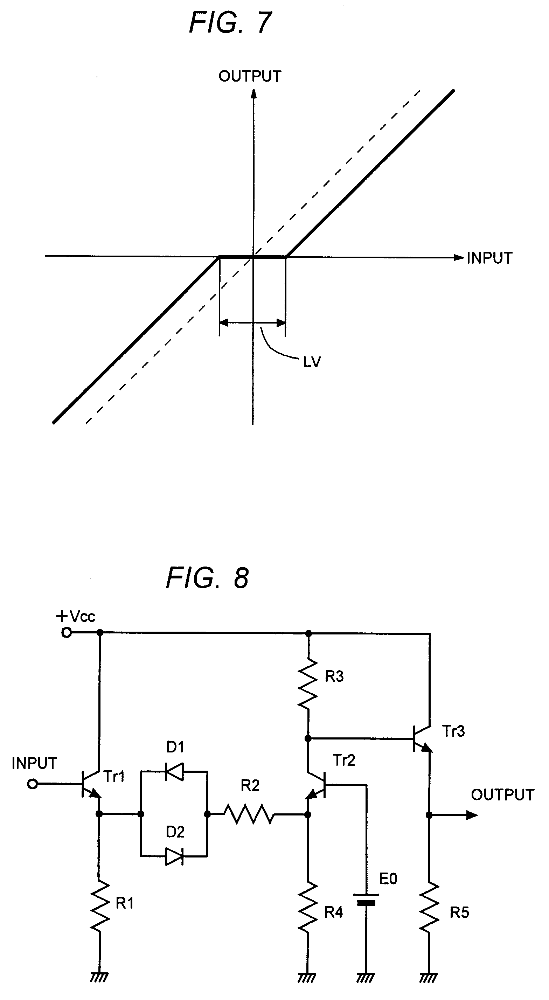

Fig. 6 shows a video signal processing circuit according to a first embodiment of the present invention. In Fig. 6, an encoded video signal is supplied to a delay circuit 1, a helper signal demodulator circuit 2 and a sync separator circuit 21. An output of the delay circuit 1 is supplied to a switching circuit 4. An output of the helper signal demodulator circuit 2 is supplied to a coring circuit 3 which is a main portion of this embodiment. An input/output characteristics of the coring circuit 3 is shown in Fig. 7. The coring circuit 3 has an insusceptible band LV in a predetermined range of signal level insusceptible to an input signal to remove noise component and a DC variation thereof.

The coring circuit 3 may be constructed as shown in Fig. 8. The input signal insusceptible band LV of the coring circuit 3 is set by using characteristics of diodes D1 and D2. For example, a forward voltage of the diode D1 sets an insusceptible band against a positive input signal and a forward voltage of the diode D2 sets the insusceptible band against a negative input signal. The level of the insusceptible band is set to about 1/10 of a maximum amplitude of a helper signal input or less.

With the coring processing, there are the following two problems occur; (1) even the helper signal is removed when its amplitude is small and (2) the helper signal component transmitted is reduced with reduction of the amplitude of the helper signal. However, it has been found that, when the insusceptible band level LV is set to, for example, about 1/10 of the maximum amplitude of the input helper signal, the problems (1) and (2) do not substantially affect an image displayeed on a TV screen and noise component superposed on the video signal is removed. Although the circuit shown in Fig. 8 is to perform a general coring processing, any other coring circuit may be used as the coring circuit 3 provided that it can set an insusceptible band LV of a predetermined level.

The noise component superposed on the transmitted encoded video signal as well as the DC variation of the demodulated helper signal is removed in this masnner. Therefore, it is possible to obtain the demodulated helper signal having no noise component. The demodulated helper signal level is set to a reference level through a reference level setting circuit 5 and then supplied to the switching circuit 4.

On the other hand, the sync separator circuit 21 separates a sync signal from the encoded video signal supplied thereto and supplies it to a switching signal generator circuit 22. The switching signal generator circuit 22 generates a switching signal 22a which is in high level during a period in which the helper signal exists and supplies the switching signal 22a to the switching circuit 4.

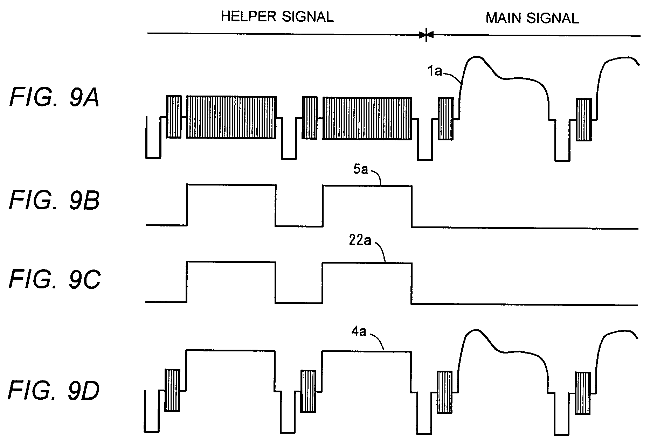

In response to the switching signal 22a, the switching circuit 4 selectively outputs one of the video signal 1a output from the delay circuit 1 and shown in Fig. 9A and the demodulated baseband helper signal output from the reference level setting circuit 5 and shown in Fig. 9B and supplies an output signal 4a shown in Fig. 9D to the Y/C separator circuit 6.

The Y/C separator circuit 6 separates the output signal 4a of the switching circuit 4 to the luminance signal Y including the demodulated helper signal and the chrominance signal C. The luminance signal and the chrominance signal output from the Y/C separator circuit 6 are supplied to a CRT 14 through a helper signal decoder 13 and a color decoder 12, respectively, as in the prior art circuit shown in Fig. 2. The helper signal decoder 13 decodes the demodulated helper signal to emphasize the main signal of the video signal and improve the fineness of the video signal to thereby enable the CRT 14 to display the image of the PALplus system.

It may be possible to provide the coring circuit 3 for removing the noise component and the DC variation superposed on the encoded video signal on the output side of the switching circuit 4.

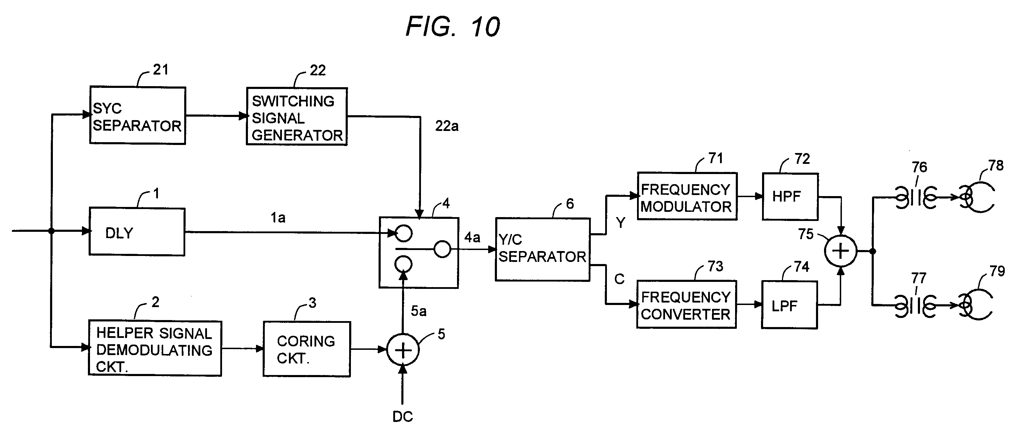

Fig. 10 is a block diagram of a video signal recording apparatus according to a second embodiment of the present invention. In Fig. 10, the video signal recording apparatus comprises a delay circuit 1, a helper signal demodulator circuit 2, a coring circuit 3, a switching circuit 4, a sync separator circuit 21, a switching signal generator 22 and a Y/C separator circuit 6. Since constructions and operations of these components are the same as those of the first embodiment shown in Fig. 6, a further description thereof is omitted. In Fig. 10, the luminance signal Y from the Y/C separator circuit 6 is frequencymoulated by a frequency modulator 71 and supplied to one input of a mixer circuit 75 through a HPF 72. On the other hand, the chrominance signal C from the Y/C separator circuit 6 is frequencyconverted to a frequency band lower than the frequency of the frequencymodulated luminance signal by a frequency converter 73 and supplied to the other input of the mixer circuit 75 through a LPF 74. The frequencymodulated luminance sugnal and the frequencyconverted chrominance signal are frequencymultiplexed in the mixer circuit 75, resulting in a recording signal. The recording signal is supplied through rotary transformers 76 and 77 to rotary magnetic heads 78 and 79 through which it is recorded on a magnetic tape.

By performing the coring processing for at least the helper signal of the transmitted encoded video signal by the coring circuit 3, the noise component superposed on the helper signal is reduced, so that it is possible to improve the quality of the encode video sinal recorded by the video signal recording apparatus. That is, since the noise component on the helper signal is reduced, the effect of the noise component on the reproduced video signal during the reproducing operation becomes negligible on the TV screen.

However, in the apparatus shown in Fig. 10, it is impossible to reduce the effect of the VTR noise generated in the recording/reproducing process in the VTR. That is, when the encoded video signal recorded by the apparatus shown in Fig. 10 is to be reproduced, the VTR noise is added to the reproduced luminance signal as mentioned previously, so that the effect of the VTR noise becomes remarkable on the TV screen.

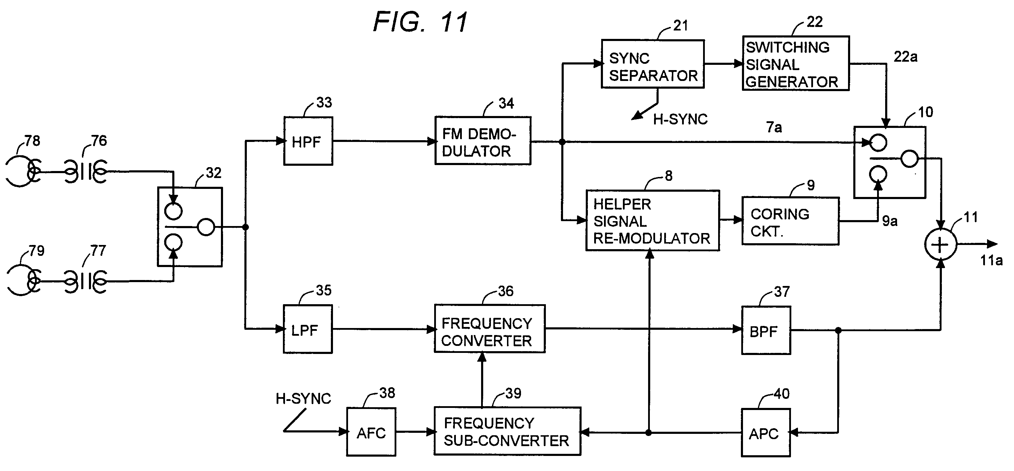

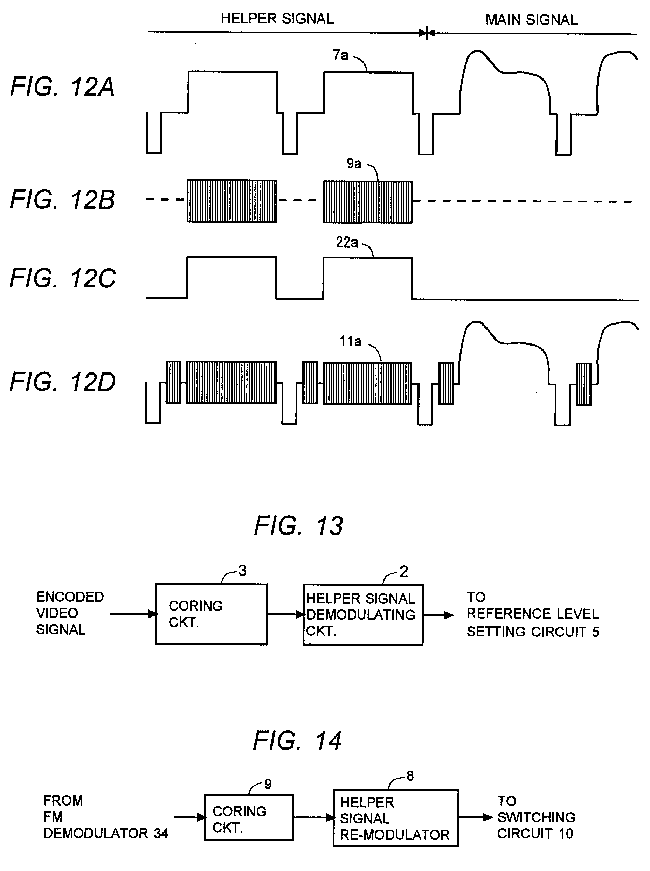

Fig. 11 shows a video signal reproducing apparatus according to a third embodiment of the present invention and Figs. 12A to 12D show signal waveforms at various portions of the signal reproducing apparatus shown in Fig. 11. A recording apparatus to be paired with the video signal reproducing apparatus shown in Fig. 11 may be the video signal recording apparatus shown in Fig. 10 without the coring circuit 3. That is, the encoded video signal is recorded on the magnetic tape without performing the coring processing for the helper signal. In Fig. 11, a reproduced signal reproduced from the magnetic tape by rotary magnetic heads 78 and 79 is supplied to a switching circuit 32 through rotary transformers 76 and 77. The switching circuit 32 selectively outputs one of the reproduced signal from the rotary magnetic head 78 and the reproduced signal from the rotary magnetic head 79 so that a continuous reproduced signal is supplied to a LPF 35 and a HPF 33. The LPF 35 passes a low frequency component, that is, a low frequency converted color signal, of the reproduced signal to a frequency converter 36. The frequency converter 36 converts the low frequency converted color signal into a chrominance signal having an original carrier frequency on the basis of a local signal supplied from a frequency sub-converter 39. An output of the frequency converter 36 is supplied to a mixer circuit 11 through a BPF 37. A color burst signal portion of an output of the BPF 37 is supplied to an APC (automatic phase control) circuit 40. The APC circuit 40 generates a stable color subcarrier having no phase variation on the basis of the color burst signal and supplies it to the frequency sub-converter 39. On the other hand, an AFC (automatic frequency control) circuit 38 is supplied with a horizontal sync signal separated from the reproduced video signal by a sync separator circuit 21. The AFC circuit 38 generates a continuous signal on the basis of the horizontal sync signal and supplies it to the frequency sub-converter 39. The frequency sub-converter 39 generates the local signal having a frequency which is a sum of frequencies of output signals of the APC circuit and the AFC circuit and supplies it to the frequency converter 36.

On the other hand, the HPF 33 passes a high frequency component, that is, a frequencymodulated luminance signal component, of the reproduced signal to a frquency demodulator 34. The frequency demodulator circuit 34 frequencydemodulates the reproduced signal from the HPF 33 and a resultant reproduced luminance signal 7a which is shown in Fig. 12A is supplied to a helper signal re-modulator circuit 8, one terminal of a switching circuit 10 and the sync separator circuit 21. The helper signal re-modulator circuit 8 AMmodulates the reproduced luminance signal including the baseband helper signal on the basis of the stable color subcarrier supplied from the APC circuit 40. An output signal of the helper signal re-modulator circuit 8 which is shown in Fig. 12B is supplied to a coring circuit 9. The coring circuit 9 performs the coring processing for the re-modulated helper signal to remove noise component superposed on the encoded video signal (for example, noise component superposed on the encoded video signal during transmission thereof and recorded as it is) and the VTR noise at once.

That is, in the video signal reproducing apparatrus shown in Fig. 11, the coring circuit 9 is provided subsequent to the helper signal re-modulator circuit 8 in place of the coring circuit 3 subsequent to the helper signal demodulating circuit 2 as shown in Fig. 10. The coring circuit 9 performs the coring processing for the helper signal obtained by re-modulating the reproduced luminance signal to thereby remove both the noise component superposed on the helper signal during transmission thereof and the VTR noise generated during recording/reproducing operation.

The sync separator circuit 21 separates the sync signal from the reproduced luminance signal 7a and supplies the sync signal to the switching signal generator 22. The switching signal generator 22 supplies the switching signal 22a, which, as shown in Fig. 12C, is high level during the period during which the helper signal of the reproduced luminance signal exists, to the switching circuit 10. The switching circuit 10 supplies to the mixer circuit 11 the output signal 9a of the coring circuit 9 in the period during which the switching signal 22a is in high level and the reproduced luminance signal 7a from the frequency demodulator 34 in the period during which the switching signal 22a is in low level. The mixer circuit 11 mixes the luminance signal including the re-modulated helper signal from the switching circuit 10 with the reproduced chrominance signal from the BPF 37 and outputs the reproduced video signal 11a of the PALplus system as shown in Fig. 12D.

It may be possible to provide the coring circuit 3 shown in Fig. 6 previous to helper signal demodulating circuit 2 as shown in Fig. 13. And it may be possible to provide the coring circuit 9 shown in Fig. 11 previous to helper signal re-modulator circuit 8 as shown in Fig. 14. Futher, in Fig. 11, it may be possible to provide the coring circuit 9 subsequent to the switching circuit 10 to perform the coring processing for the whole reproduced luminance signal. Alternatively, it may be possible to provide the coring circuit 9 subsequent to the mixer circuit 11 to perform the coring processing for the whole reproduced video signal of the PALplus system at the output of the mixer 11.

## Claims

1. A video signal processing circuit for processing a high definition video signal compatible with a predetermined broadcasting system, which has an aspect ratio different from that of the predetermined broadcasting system and contains a main signal constituting the high defintion video signal and a modulated auxiliary signal obtained by modulating an auxiliary signal containing additional video information in a predetermined modulation system, the video signal processing circuit comprising:
demodulating means for demodulating the modulated auxiliary signal to a baseband signal and outputting a demodulated auxiliary signal; and
noise removing means for removing noise component superposed on the demodulated auxiliary signal output from said demodulating means.

2. The video signal processing circuit claimed in claim 1, further comprising:
switching signal generating means responsive to the video signal for generating a switching signal indicative of a period of the auxiliary signal of the video signal; and
switching means responsive to the switching signal for selectively outputting one of the demodulated auxiliary signal from said noise removing means and the video signal.

3. A video signal processing circuit for processing a high definition video signal compatible with a predetermined broadcasting system, which has an aspect ratio different from that of the predetermined broadcasting system and contains a main signal constituting the high defintion video signal and a modulated auxiliary signal obtained by modulating an auxiliary signal containing additional video information in a predetermined modulation system, the video signal processing circuit comprising:
noise removing means for removing noise component superposed on the modulated auxiliary signal; and
demodulating means for demodulating an output signal of said noise removing means and outputting a demodulated auxiliary signal.

4. The video signal processing circuit claimed in claim 3, further comprising:
switching signal generating means responsive to the video signal for generating a switching signal indicative of a period of the auxiliary signal of the video signal; and
switching means responsive to the switching signal for selectively outputting one of the demodulated auxiliary signal from said demodulating means and the video signal.

5. A video signal recording apparatus for recording a high definition video signal compatible with a predetermined broadcasting system, which has an aspect ratio different from that of the predetermined broadcasting system and contains a main signal constituting the high defintion video signal and a modulated auxiliary signal obtained by modulating an auxiliary signal containing additional video information in a predetermined modulation system, said video signal recording apparatus comprising:
demodulating means for demodulating the modulated auxiliary signal and outputting a demodulated auxiliary signal;
noise removing means for removing noise component superposed on the demodulated auxiliary signal output from said demodulating means; and
recording means for recording a video signal containing at least the demodulated auxiliary signal output from said noise removing means.

6. The video signal recording apparatus claimed in claim 5, further comprising:
switching signal generating means responsive to the video signal for generating a switching signal indicative of a period of the auxiliary signal of the video signal; and
switching means responsive to the switching signal for selectively outputting one of the demodulated auxiliary signal from said noise removing means and the video signal and supplying the one signal to said recording means.

7. A video signal recording apparatus for recording a high definition video signal compatible with a predetermined broadcasting system, which has an aspect ratio different from that of the predetermined broadcasting system and contains a main signal constituting the high defintion video signal and a modulated auxiliary signal obtained by modulating an auxiliary signal containing additional video information in a predetermined modulation system, said video signal recording apparatus comprising:
noise removing means for removing noise component superposed on the modulated auxiliary signal;
demodulating means for demodulating an output signal of said noise removing means and outputting a demodulated auxiliary signal; and
recording means for recording a video signal containing at least the demodulated auxiliary signal output from said demodulating means.

8. The video signal recording apparatus claimed in claim 7, further comprising:
switching signal generating means responsive to the video signal for generating a switching signal indicative of a period of the auxiliary signal of the video signal; and
switching means responsive to the switching signal for selectively outputting one of the demodulated auxiliary signal from said demodulating means and the video signal and supplying the one signal to said recording means.

9. A video signal recording and reproducing apparatus for recording and reproducing a high definition video signal compatible with a predetermined broadcasting system, which has an aspect ratio different from that of the predetermined broadcasting system and contains a main signal constituting the high defintion video signal and a modulated auxiliary signal obtained by modulating an auxiliary signal containing additional video information in a predetermined modulation system, said video signal recording and reproducing apparatus comprising:
demodulating means for demodulating the modulated auxiliary signal and outputting a demodulated auxiliary signal;
recording and reproducing means for recording and reproducing a video signal containing at least the demodulated auxiliary signal output from said demodulating means;
re-modulating means for re-modulaing at least the auxiliary signal of the reproduced signal output from said recording and reproducing means and outputting a re-modulated auxiliary signal; and
noise removing means for removing noise component superposed on the re-modulated auxiliary signal output from said re-modulation means.

10. The video signal recording and reproducing apparatus claimed in claim 9, further comprising:
switching signal generating means responsive to the reproduced signal for generating a switching signal indicative of a period of the auxiliary signal of the reproduced signal; and
switching means responsive to the switching signal for selectively outputting one of the re-modulated auxiliary signal from said noise removing means and the reproduced signal.

11. A video signal recording and reproducing apparatus for recording and reproducing a high definition video signal compatible with a predetermined broadcasting system, which has an aspect ratio different from that of the predetermined broadcasting system and contains a main signal constituting the high defintion video signal and a modulated auxiliary signal obtained by modulating an auxiliary signal containing additional video information in a predetermined modulation system, said video signal recording and reproducing apparatus comprising:
demodulating means for demodulating the modulated auxiliary signal and outputting a demodulated auxiliary signal;
recording and reproducing means for recording and reproducing a video signal containing at least the demodulated auxiliary signal output from said demodulating means;
noise removing means for removing noise component superposed on the reproduced signal output from said recording and reproducing means; and
re-modulating means for re-modulaing at least the auxiliary signal of an output signal output from said noise removing means and outputting a re-modulated auxiliary signal.

12. The video signal recording and reproducing apparatus claimed in claim 11, further comprising:
switching signal generating means responsive to the reproduced signal for generating a switching signal indicative of a period of the auxiliary signal of the reproduced signal; and
switching means responsive to the switching signal for selectively outputting one of the re-modulated auxiliary signal from said re-modulating means and the reproduced signal.
